(19) Europäisches Patentamt
European Patent Office
Office européen des brevets

(11) **EP 2 336 737 A2**

(12) **EUROPÄISCHE PATENTANMELDUNG**

(43) Veröffentlichungstag:
**22.06.2011 Patentblatt 2011/25**

(51) Int Cl.:
***G01H 3/12*** *(2006.01)*

(21) Anmeldenummer: **10195439.4**

(22) Anmeldetag: **16.12.2010**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **16.12.2009 AT 7962009 U**

(71) Anmelder: **Zinober, Renate
2344 Maria Enzersdorf (AT)**

(72) Erfinder: **Kalivoda, Manfred T.
2344, Maria Enzersdorf (AT)**

(74) Vertreter: **KLIMENT & HENHAPEL
Patentanwälte OG
Singerstrasse 8
1010 Wien (AT)**

(54) **Verfahren zu Detektion zeitlicher Trends von Schallemissionen**

(57)    Die Erfindung betrifft ein Verfahren zur Detektion zeitlicher Trends von Schallemissionen, insbesondere von Schallpegeln, etwa des Schienenverkehrs.

Dabei ist vorgesehen, dass
- für einen bestimmten ersten Zeitraum der Schallereignispegel und eine die Anzahl der Schallquellen repräsentierende Größe mittels Messung bestimmt wird,
- der Schallereignispegel mittels der die Anzahl der Schallquellen repräsentierenden Größe normiert wird,
- für zumindest einen bestimmten zweiten Zeitraum, der gleich lang wie der erste Zeitraum ist, der Schallereignispegel und die gleiche, die Anzahl der Schallquellen repräsentierende Größe mittels Messung bestimmt wird,
- der Schallereignispegel des zweiten Zeitraums mittels der die Anzahl der Schallquellen repräsentierenden Größe normiert wird,
- die normierten Schallereignispegel oder daraus abgeleitete Pegelgrößen, wie die Dauerschallpegel, des ersten und des zweiten Zeitraums miteinander verglichen werden.

Mittels des erfindungsgemäßen Verfahrens ist es möglich, aufgrund der gemessenen Schallpegel auf den Schallpegel der einzelnen Schallquellen zu schließen.

EP 2 336 737 A2

**Beschreibung**

Die Erfindung bezieht sich auf ein Verfahren zur Detektion zeitlicher Trends von Schallemissionen, insbesondere von Schallpegeln, etwa des Schienenverkehrs.

Die Geräuschemissionen und -immissionen des Schienenverkehrs stellen heute ein umweltpolitisches Problem dar. Es ist daher von großem Interesse, zeitliche Trends der Geräuschemission bzw. -immission von Schienenwegen durch Messung (und nicht durch Folgerungen aus anderen Daten) zu erfassen und zu erkennen, um Verbesserungen und Verschlechterungen der Geräuschsituation dokumentieren zu können. Man will damit beispielsweise zeigen können, wie sich die Geräuschemission oder -immission durch eine stete Umstellung der Fahrzeugflotte auf lärmarme Wagen verringert oder durch eine kontinuierliche Zunahme der Verriffelung des Gleises die Geräuschemission oder -immission erhöht wird.

Als Maß für Geräuschemissionen werden oft der Dauerschallpegel $L_{eq}$ oder der Schallereignispegel $L_E$ herangezogen. Das Ohr nimmt jedoch Töne verschiedener Frequenz mit gleichem Schalldruck nicht gleich laut wahr. Zur Korrektur dieser Eigenart wird bei Schallmessungen zwischen Sensor und Messgerät ein Filter geschaltet, der dafür sorgt, dass die vom Menschen empfundene Lautstärke gemessen wird. Häufig verwendet man den Korrekturfilter A, man sagt dann, der Schallpegel ist A-bewertet.

Die Erfindung arbeitet daher vorzugsweise mit A-bewerteten Größen, welche durch ein tiefgestelltes "A" repräsentiert werden. Es können jedoch auch unbewertete Schallpegel oder Schallpegel mit anderen Bewertungen zur Anwendung kommen. Die angegebenen Formeln gelten klarerweise sowohl für unbewertete als auch für bewertete Schallpegel.

Der A-bewertete energieäquivalente Dauerschallpegel $L_{A,eq}$ ist heute das am meisten verwendete Verfahren, um die Geräuschemission und in der Folge auch die Geräuschimmission des Schienenverkehrs zu beschreiben. Entsprechende Mess- und Rechenverfahren, mit deren Hilfe man aus dem zeitlich schwankenden A-bewerteten Pegel $L_A$ (t) einer Zugvorbeifahrt den A-bewerteten energieäquivalenten Dauerschallpegel $L_{A,eq}$ ermitteln kann, existieren und sind Stand der Technik.

Zur Beschreibung der gesamten abgestrahlten Schallenergie eines Geräuschereignisses, z.B. einer Zugvorbeifahrt, dient eine weitere Kenngröße, nämlich der A-bewertete Schallereignispegel $L_{A,E}$. Da der $L_{A,E}$ den gleichen Energieinhalt besitzt wie das über einen Zeitverlauf von Zeitpunkt t1 bis t2 schwankende Geräusch einer Zugvorbeifahrt, charakterisiert der $L_{A,E}$ einerseits die Schalldosis einer Zugvorbeifahrt und kann somit auch zur Ermittlung des A-bewerteten Dauerschallpegels dieser Zugvorbeifahrt verwendet werden, denn es gilt:

$$L_{Aeq,i,X} = L_{AE,i} - 10 \lg (T_X)$$

mit

$L_{A,eq,i,X}$    A-bewerteter Dauerschallpegel der betrachteten Zugvorbeifahrt i für den Beurteilungszeitraum X
$L_{AE,i}$    A-bewerteter Schallereignispegel der betrachteten Zugvorbeifahrt i
$T_X$    Dauer der Beurteilungszeit X in Sekunden, z.B. $T_X$ = 46800 s für den Tag, $T_X$ = 10800 s für den Abend und $T_X$ = 28800 s für die Nacht.

Addiert man nun die Schallenergien aller im jeweiligen Beurteilungszeitraum X gemessenen Züge, erhält man eine direkte Maßzahl für die Geräuschimmission, denn es gilt:

$$L_{A,eq,X,IP} = L_{AE} - 10 \lg (T_X) - L_{trans,IP} = L_{AE} - \text{const.}$$

mit

$L_{A,eq,X,IP}$    A-bewerteter Dauerschallpegel an einem beliebigen Immissionspunkt IP aller betrachteten Zugvorbeifahrten im Beurteilungszeitraum X

$L_{AE}$    A-bewerteter Schallereignispegel aller betrachteten Zugvorbeifahrten

$L_{trans,IP}$  Pegeländerung zufolge Schallausbreitung zwischen dem Messpunkt und dem Immissionspunkt IP. Die Ausbreitungsbedingungen hängen von der Geometrie und Beschaffenheit des Schallausbreitungsweges zwischen der Bahnlinie (Emission) und dem Immissionspunkt ab und sind unabhängig von der einzelnen Zugvorbeifahrt und somit konstant für jeden Immissionspunkt.

Der Term 10 lg($T_X$) ist für den jeweiligen Zeitabschnitt Tag, Abend oder Nacht immer konstant, ebenso die Pegeländerung zufolge Schallausbreitung $L_{trans,IP}$ für einen gegebenen Immissionspunkt IP, das heißt, der Schallereignispegel unterscheidet sich vom Dauerschallpegel nur um eine Konstante.

Da nicht jeden Tag gleich viele Züge mit derselben Anzahl von lauten und leisen Achsen im entsprechenden Zeitabschnitt (z.B. Tag) fahren, unterscheiden sich die Anzahl der Schallquellen (Achsen) und damit die Schallpegel der einzelnen Kalendertage zum Teil beträchtlich. Deshalb lassen die Schwankungen der Schallpegel von aufeinander folgenden, gleich langen Zeitabschnitten nur eingeschränkt, weil mit großen Streuungen behaftet, Rückschluss auf eine Verbesserung oder Verschlechterung der Fahrzeugflotte oder der Gleise zu.

Es ist daher eine Aufgabe der Erfindung, ein Verfahren zur Verfügung zu stellen, das aufgrund der gemessenen Schallpegel sowie Zahl und Art von Schallquellen einen Rückschluss auf den Schallpegel der einzelnen Schallquellen erlaubt.

Diese Aufgabe wird durch ein Verfahren gemäß Anspruch 1 gelöst, indem

- für einen bestimmten ersten Zeitraum der Schallereignispegel und eine die Anzahl der Schallquellen repräsentierende Größe mittels Messung bestimmt wird,

- der Schallereignispegel mittels der die Anzahl der Schallquellen repräsentierenden Größe normiert wird,

- für zumindest einen bestimmten zweiten Zeitraum, der gleich lang wie der erste Zeitraum ist, der Schallereignispegel und die gleiche, die Anzahl der Schallquellen repräsentierende Größe mittels Messung bestimmt wird,

- der Schallereignispegel des zweiten Zeitraums mittels der die Anzahl der Schallquellen repräsentierenden Größe normiert wird,

- die normierten Schallereignispegel oder daraus abgeleitete Pegelgrößen, wie die Dauerschallpegel, des ersten und des zweiten Zeitraums miteinander verglichen werden.

Die Erfindung sieht also vor, die durch Messung gewonnenen Schallereignispegel, insbesondere die $L_{AE}$-Werte, auf eine einheitliche Basis zu beziehen, also zu normieren.

Es gibt zwei wesentliche Faktoren, welche die Höhe des Schallereignispegels eines Zeitraums $T_X$ beeinflussen, nämlich der Zugverkehr und die spezifische Geräuschemission der einzelnen Züge. Unter Zugverkehr verstehen wir die Art, Anzahl und Länge der einzelnen Züge. Nicht an jedem (Kalender)Tag verkehrt dieselbe Anzahl von Zügen mit gleicher Länge bzw. derselben Anzahl von Achsen. Damit muss sich natürlich auch der gemessene Schallereignispegel von Tag zu Tag unterscheiden. Der je Fahrzeug bzw. Rad abgestrahlte Schallpegel determiniert die spezifische Geräuschemission des Fahrzeuges bzw. der Fahrzeugachse.

Will man generelle Trends unabhängig von den täglichen Schwankungen des Zugverkehrs darstellen, muss man die je Kalendertag gemessenen Schallereignispegel, insbesondere die $L_{AE}$-Werte, um einen akustisch relevanten Kennwert korrigieren. Dazu bieten sich als geeignete Kennwerte die im Beurteilungszeitraum $T_X$ des betrachteten Tages festgestellte Gesamtlänge aller Züge, insbesondere je Zugkategorie, oder die im Beurteilungszeitraum $T_X$ des betrachteten Tages festgestellte Gesamtanzahl der Achsen je Zugkategorie an. Man kann nämlich davon ausgehen, dass jede Achse eine Schallquelle darstellt und somit der Pegel zunehmen wird, wenn die Zahl der Achsen (=Schallquellen) steigt. Es ist daher sinnvoll, die gemessenen Schallereignispegel $L_{AE}$ auf eine bestimmte Anzahl von Achsen zu normieren.

Folglich ist als eine Ausführungsform des erfindungsgemäßen Verfahrens vorgesehen, dass die Anzahl von Achsen eines Zuges jene Größe ist, welche die Anzahl Ax der Schallquellen repräsentiert, wobei die Bezugsgröße für die Normierung eine festgelegte Anzahl Ac von Achsen ist, beispielsweise 100 Achsen oder die Anzahl der Achsen gemäß mittlerem oder maximalem Betriebsprogramm der betrachteten Strecke, und sich der normierte Schallereignispegel $L_{E,norm}$ aus dem gemessenen Schallereignispegel $L_E$ wie folgt berechnet:

$$L_{E,norm} = L_E - 10 \; lg \; (Ax/Ac).$$

Diese Ausführungsform kann noch dadurch verfeinert werden, dass verschiedene Zugkategorien k berücksichtigt werden, indem die festgelegte Anzahl der Achsen $Ac_k$ als Bezugsgröße für die Normierung, die Schallereignispegel $L_{E,k}$ und die Anzahl $Ax_k$ der Achsen für jede Zugkategorie k erfasst werden, wobei sich der normierte Schallereignispegel $L_{E,norm,k}$ für eine Zugkategorie k wie folgt berechnet:

$$L_{E,norm,k} = L_{E,k} - 10 \lg (Ax_k/Ac_k)$$

und der gesamte Schallereignispegel $L_{E,norm,tot}$ nach:

$$L_{E,norm,tot} = 10 \lg \left( \Sigma 10^{L_{E,norm,k}/10} \right).$$

Als Alternative zur Normierung auf die Anzahl der Achsen bietet sich eine Ausführungsform zur Normierung auf die Zuglänge an, indem nämlich die Länge Lz eines Zuges jene Größe ist, welche die Anzahl der Schallquellen repräsentiert, wobei die Bezugsgröße für die Normierung eine festgelegte Zuglänge Lc ist, beispielweise eine Länge von 1000m oder die mittlere oder maximale Zuglänge gemäß Betriebsprogramm der betrachteten Strecke, und sich der normierte Schallereignispegel wie folgt berechnet:

$$L_{E,norm} = L_E - 10 \lg (Lz/Lc).$$

Auch diese Ausführungsform kann so verfeinert werden, dass verschiedene Zugkategorien k berücksichtigt werden, indem die festgelegte Zuglänge $Lc_k$ als Bezugsgröße für die Normierung, die Schallereignispegel $L_{E,k}$ und die Längen $Lz_k$ für jede Zugkategorie k erfasst werden, wobei sich der normierte Schallereignispegel $L_{E,norm,k}$ für eine Zugkategorie k wie folgt berechnet:

$$L_{E,norm,k} = L_{E,k} - 10 \lg (Lz_k/Lc_k)$$

und der gesamte Schallereignispegel $L_{E,norm,tot}$ nach:

$$L_{E,norm,tot} = 10 \lg \left( \Sigma 10^{L_{E,norm,k}/10} \right).$$

Um das menschliche Schallempfinden zu berücksichtigen, kann vorgesehen werden, dass alle Schallereignispegel A-bewertet gemessen werden. Statt dieser Frequenzbewertung können auch andere Frequenz- oder Zeitbewertungen bei der Schallmessung zum Einsatz kommen.

Damit die Daten gut vergleichbar sind, bietet es sich an, dass erster und zweiter Zeitraum kleiner gleich einem Tag sind und Beginn und Ende des Zeitraums jeden Tag gleich sind.

Beim erfindungsgemäßen Verfahren können selbstverständlich auch frequenzanalysierte Schallereignispegel, wie Oktav- oder Terz-Schallereignispegel, verwendet werden.

Im Folgenden wird die Erfindung anhand zweier Beispiele näher erläutert.

Im ersten Beispiel wird jeden Tag im gleichen Zeitraum $T_X$ (gleicher Beginn, gleiches Ende) für alle in diesem Zeitraum auftretenden Schallereignisse, also Zugvorbeifahrten, der A-bewertete Schallereignispegel an der gleichen Stelle einer Schienenstrecke gemessen und gleichzeitig auch die Anzahl der Achsen der vorbeifahrenden Züge. Aus den einzelnen Schallereignispegeln eines Tages wird der gesamte Schallereignispegel berechnet sowie die gesamte Anzahl der Achsen.

Als Kennwert zur Korrektur der täglichen Schwankungen des Zugverkehrs wird die im Beurteilungszeitraum $T_X$ des betrachteten Tages festgestellte Gesamtanzahl der Achsen herangezogen. Da man davon ausgehen kann, dass jede Achse eine Schallquelle darstellt und somit der Schallpegel mit der Zahl der Achsen steigt, ist es sinnvoll, die mit A-bewerteten gemessenen Schallereignispegel $L_{AE}$ auf eine bestimmte Anzahl von Achsen zu normieren.

Die nachstehende Formel normiert die gemessenen $L_{AE}$-Werte beispielsweise auf 100 Zugachsen:

$$L_{AE,norm} = L_{AE} - 10 \ lg \ (Ax/100)$$

mit

$L_{AE,norm}$     der auf 100 Achsen normierte A-bewertete Schallereignispegel

$L_{AE}$     gemessener A-bewerteter Schallereignispegel

$Ax$     gemessene Anzahl der Achsen, die zu $L_{AE}$ führen

Nun kann man die Schallereignispegel $L_{AE}$ verschiedener Tage miteinander vergleichen und sehen, ob es einen Trend zum Anstieg oder Abfall des Schallereignispegels gibt.

Man kann die Normierung undifferenziert für alle erfassten Zugvorbeifahrten durchführen oder vorzugsweise individuell für jede Zugkategorie. Dafür ist es erforderlich, die Schallereignispegel sowie die Anzahl der Achsen je Zugkategorie zu erfassen:

$$L_{AE,norm,k} = L_{AE,k} - 10 \ lg \ (Ax_k/100)$$

mit

$L_{AE,norm,k}$     der auf 100 Achsen normierte A-bewertete Schallereignispegel der Zugkategorien k
$L_{AE,k}$     gemessener A-bewerteter Schallereignispegel der Zugkategorien k
$Ax_k$     gemessene Anzahl der Achsen der Zugkategorien k, die zu $L_{AE,k}$ führen

sowie daraus wieder den gesamten normierten Schallereignispegel für den Zeitraum $T_X$ zu berechnen:

$$L_{AE,norm,tot} = 10 \ lg \ (\Sigma 10^{\ L_{AE,norm,k} \ / \ 10})$$

mit

$L_{AE,norm,tot}$     der gesamte normierte A-bewertete Schallereignispegel aller Zugkategorien k
$L_{AE,norm,k}$     der normierte A-bewertete Schallereignispegel der Zugkategorien k

Dieser Wert $L_{AE,norm,tot}$ eines Tages kann dann zur Feststellung eines zeitlichen Trends mit jenem anderer Tage verglichen werden.

Im zweiten Beispiel wird jeden Tag im gleichen Zeitraum $T_X$ (gleicher Beginn, gleiches Ende) für alle in diesem Zeitraum auftretenden Schallereignisse, also Zugvorbeifahrten, der A-bewertete Schallereignispegel an der gleichen Stelle einer Schienenstrecke gemessen und gleichzeitig auch die jeweilige Länge der vorbeifahrenden Züge. Aus den einzelnen Schallereignispegeln eines Tages wird der gesamte Schallereignispegel berechnet sowie die gesamte Länge aller Züge des Zeitraums $T_X$. Der gesamte Schallereignispegel wird dann auf eine einheitliche Zuglänge, beispielsweise 1000 Meter, normiert:

$$L_{AE,norm} = L_{AE} - 10 \ lg \ (Lz/1000)$$

mit

L$_{AE,norm}$     der auf 1000 Meter Zuglänge normierte A-bewertete Schallereignispegel
L$_{AE}$         gemessener A-bewerteter Schallereignispegel
Lz         gemessene Zuglänge, die zu L$_{AE}$ führt

Man kann auch bei der Zuglänge die Normierung undifferenziert für alle erfassten Zugvorbeifahrten durchführen oder vorzugsweise individuell für jede Zugkategorie. Dafür ist es erforderlich, die Schallereignispegel sowie die Zuglänge je Zugkategorie zu erfassen:

$$L_{AE,norm,k} = L_{AE,k} - 10 \; lg \; (Lz_k/1000)$$

mit

L$_{AE,norm,k}$     der auf 1000 Meter Zuglänge normierte A-bewertete Schallereignispegel der Zugkategorien k
L$_{AE,k}$        gemessener A-bewerteter Schallereignispegel der Zugkategorien k
Lz$_k$        gemessene Länge der Zugkategorien k, die zu L$_{AE,k}$ führen

sowie daraus wieder den gesamten normierten Schallereignispegel für den Zeitraum T$_X$ zu berechnen:

$$L_{AE,norm,tot} = 10 \; lg \; (\Sigma\, 10^{\; L_{AE,norm,k} \, / \, 10})$$

mit

L$_{AE,norm,tot}$     der gesamte normierte A-bewertete Schallereignispegel aller Zugkategorien k

L$_{AE,norm,k}$     der normierte A-bewertete Schallereignispegel der Zugkategorien k

Dieser Wert L$_{AE,norm,tot}$ eines Tages kann dann zur Feststellung eines zeitlichen Trends mit jenem anderer Tage verglichen werden.

Grundsätzlich sind beide Methoden, die über die Achsanzahl der Züge und jene über die Zuglänge, gleichwertig. Bei all jenen Zugkategorien, bei denen die Achsanzahl und Zuglänge sehr stark korreliert ist, wie beispielsweise Reisezüge oder Triebwagengarnituren, liefern beide Methoden gleiche Ergebnisse. Bei all jenen Zugkategorien, bei denen bei gleicher Länge große Unterschiede bei der Zahl der Achsen je Zuglänge auftreten, wie etwa Güterzüge, liefert die Normierung über die Achsen bessere Ergebnisse, weil jedes Rad und somit jede Achse eine Schallquelle darstellt und durch die Normierung über die Achsanzahl der Einfluss der unterschiedlichen Menge von Schallquellen besser korrigiert wird.

In beiden Beispielen kann aus dem gesamten normierten A-bewerteten Schallereignispegel nach der eingangs genannten Formel der A-bewertete Dauerschallpegel aller betrachteten Zugvorbeifahrten im Beurteilungszeitraum X berechnet werden, und zur Feststellung eines zeitlichen Trends mit den Werten anderer Tage verglichen werden.

Die Erfindung ist nicht nur auf unbearbeitete gemessene Schallereignispegel anwendbar, die hier dargestellte erfindungsgemäße Normierung der Schallereignispegel kann auch für frequenzanalysierte Pegel, wie Oktav- oder Terz-Schallereignispegel, durchgeführt werden.

**Patentansprüche**

1. Verfahren zur Detektion zeitlicher Trends von Schallemissionen, insbesondere von Schallpegeln, etwa des Schienenverkehrs, **dadurch gekennzeichnet, dass**

    - für einen bestimmten ersten Zeitraum der Schallereignispegel und eine die Anzahl der Schallquellen repräsentierende Größe mittels Messung bestimmt wird,

- der Schallereignispegel mittels der die Anzahl der Schallquellen repräsentierenden Größe normiert wird,
- für zumindest einen bestimmten zweiten Zeitraum, der gleich lang wie der erste Zeitraum ist, der Schallereignispegel und die gleiche, die Anzahl der Schallquellen repräsentierende Größe mittels Messung bestimmt wird,
- der Schallereignispegel des zweiten Zeitraums mittels der die Anzahl der Schallquellen repräsentierenden Größe normiert wird,
- die normierten Schallereignispegel oder daraus abgeleitete Pegelgrößen, wie die Dauerschallpegel, des ersten und des zweiten Zeitraums miteinander verglichen werden.

2. Verfahren nach Anspruch 1, **dadurch gekennzeichnet, dass** die Anzahl von Achsen eines Zuges jene Größe ist, welche die Anzahl Ax der Schallquellen repräsentiert, wobei die Bezugsgröße für die Normierung eine festgelegte Anzahl Ac von Achsen ist, und sich der normierte Schallereignispegel $L_{E,norm}$ aus dem gemessenen Schallereignispegel $L_E$ wie folgt berechnet:

$$L_{E,norm} = L_E - 10 \lg (Ax/Ac).$$

3. Verfahren nach Anspruch 2, **dadurch gekennzeichnet, dass** verschiedene Zugkategorien k berücksichtigt werden, indem die festgelegte Anzahl $Ac_k$ von Achsen als Bezugsgröße für die Normierung, die Schallereignispegel $L_{E,k}$ und die Anzahl $Ax_k$ der Achsen für jede Zugkategorie k erfasst werden, wobei sich der normierte Schallereignispegel $L_{E,norm,k}$ für eine Zugkategorie k wie folgt berechnet:

$$L_{E,norm,k} = L_{E,k} - 10 \lg (Ax_k/Ac_k)$$

und der gesamte Schallereignispegel $L_{E,norm,tot}$ nach:

$$L_{E,norm,tot} = 10 \lg \left( \Sigma 10^{L_{E,norm,k}/10} \right).$$

4. Verfahren nach Anspruch 1, **dadurch gekennzeichnet, dass** die Länge Lz eines Zuges jene Größe ist, welche die Anzahl der Schallquellen repräsentiert, wobei die Bezugsgröße für die Normierung eine festgelegte Zuglänge Lc ist, und sich der normierte Schallereignispegel wie folgt berechnet:

$$L_{E,norm} = L_E - 10 \lg (Lz/Lc).$$

5. Verfahren nach Anspruch 4, **dadurch gekennzeichnet, dass** verschiedene Zugkategorien k berücksichtigt werden, indem die festgelegte Zuglänge $Lc_k$ als Bezugsgröße für die Normierung, die Schallereignispegel $L_{E,k}$ und die Längen $Lz_k$ für jede Zugkategorie k erfasst werden, wobei sich der normierte Schallereignispegel $L_{E,norm,k}$ für eine Zugkategorie k wie folgt berechnet:

$$L_{E,norm,k} = L_{E,k} - 10 \lg (Lz_k/Lc_k)$$

und der gesamte Schallereignispegel $L_{E,norm,tot}$ nach:

$$L_{E,norm,tot} = 10 \lg \left( \Sigma 10^{L_{E,norm,k}/10} \right).$$

6. Verfahren nach einem der Ansprüche 1 bis 5, **dadurch gekennzeichnet, dass** alle Schallereignispegel A-bewertet gemessen werden.

7.  Verfahren nach einem der Ansprüche 1 bis 6, **dadurch gekennzeichnet, dass** erster und zweiter Zeitraum kleiner gleich einem Tag sind und Beginn und Ende des Zeitraums jeden Tag gleich sind.

8.  Verfahren nach einem der Ansprüche 1 bis 7, **dadurch gekennzeichnet, dass** frequenzanalysierte Schallereignispegel, wie Oktav- oder Terz-Schallereignispegel, verwendet werden.

9.  Verfahren nach einem der Ansprüche 1 bis 8, **dadurch gekennzeichnet, dass** aus dem Schallereignispegel $L_{AE}$ der Dauerschallpegel $L_{A,eq,X,IP}$ im Beurteilungszeitraum X an einem beiliebigen Immissionspunkt IP gemäß folgender Formel bestimmt wird:

$$L_{A,eq,X,IP} = L_{AE} - 10 \lg (T_X) - L_{trans,IP} = L_{AE} - const.,$$

wobei $L_{trans,IP}$ die Pegeländerung zufolge Schallausbreitung zwischen dem Messpunkt und dem Immissionspunkt IP und $T_X$ die Dauer des Beurteilungszeitraums X bezeichnet.